# EUROPÄISCHE PATENTSCHRIFT

(11) **EP 3 933 137 B1**
(45) Veröffentlichungstag und Bekanntmachung des Hinweises auf die Patenterteilung: **27.09.2023**
(21) Anmeldenummer: 21182106.1
(22) Anmeldetag: 28.06.2021
(51) Int. Cl.: E04D 13/00, G01M 3/16, G01M 3/40

(54) **MATTE ZUR ERSTELLUNG EINES LECKAGEORTUNGS-SENSORS, EIN SOLCHER SENSOR, EIN ÜBERWACHUNGSGERÄT, EINE GEBÄUDEFLÄCHE UND EIN VERFAHREN ZUR HERSTELLUNG UND VERWENDUNG EINES SOLCHEN SENSORS**
MAT FOR CREATING A LEAK LOCATION SENSOR, SUCH A SENSOR, A MONITOR, A BUILDING SURFACE, AND A METHOD OF MAKING AND USING SUCH A SENSOR
NATTE DESTINÉE À LA CRÉATION D'UN CAPTEUR DE LOCALISATION DE FUITE, CAPTEUR, APPAREIL DE SURVEILLANCE, ZONE DE CONSTRUCTION ET PROCÉDÉ DE FABRICATION ET D'UTILISATION D'UN TEL CAPTEUR

(30) Priorität: 29.06.2020 CH 7992020
(43) Veröffentlichungstag der Anmeldung: 05.01.2022
(73) Patentinhaber: Getzner Textil Aktiengesellschaft, 6700 Bludenz (AT)
(72) Erfinder: Bögl, Gerhard, 6714 Nüziders (AT)
(74) Vertreter: Keller Schneider Patent- und Markenanwälte AG

(56) Entgegenhaltungen:
- EP-A1- 2 458 106
- WO-A1-2019/234703
- WO-A2-89/00681
- US-A1- 2018 202 163
- US-B2- 10 078 030

## Beschreibung

### Technisches Gebiet

Die Erfindung betrifft eine Matte zur Erstellung eines Leckageortungs-Sensors, der geeignet ist, eine Leckage auf einer Gebäudefläche, insbesondere auf einem Flachdach oder einem Schettdach, zu orten. Sie betrifft zudem einen solchen Leckageortungs-Sensor, ein Leckageortungs Überwachungsgerät sowie eine Gebäudefläche mit einem solchen Leckageortungs-Sensor. Zudem betrifft sie ein Verfahren zum Erstellen eines Leckageortungs-Sensors und ein Verfahren zur Leckagen-Überwachung.

### Stand der Technik

Gebäude werden in der Regel gegen Eindringen von Feuchtigkeit abgedichtet. Auf einem Satteldach werden zu diesem Zweck beispielsweise Ziegel angebracht, auf denen das Regenwasser abfliessen kann, sodass das darunter liegende Gebäude trocken bleibt. Bei anderen Gebäuden oder Gebäudeflächen ist dies nicht möglich. Beispiele dafür sind Flachdächer, Schettdächer, Balkone, Dachterrassen und dergleichen. Zudem kann Wasser auch durch andere Gebäudeteile zur inneren Gebäudestruktur durchdringen, beispielsweise als Grundwasser durch den Boden oder durch eine in einen Hang gebaute Aussenwand.

Das Beheben von Wasserschäden ist dann teuer, wenn sich die Leckage nicht oder erst nach langer Zeit genau orten lässt. Insbesondere bei Flachdächern kann der Schaden, der im Gebäudeinnern entdeckt wird, von der Leckage selbst weit entfernt sein, da das eindringende Wasser einen langen Weg durch Ritzen verlaufen kann, bis es schliesslich durch eine Zimmerdecke tropft. Es ist deshalb ein wichtiges Anliegen von Bauunternehmen, bereits beim Bau eines Gebäudes Vorkehrungen zu treffen, um eine später entstandene Leckage schnell und positionsgenau orten zu können.

Bekannt sind Systeme, die mit elektrischen Widerstandsmessern auf eine Leckage schliessen können. Dazu werden Sensoren im Dach montiert, die eine entsprechende Meldung auslösen können, wenn Feuchtigkeit zu ihnen kommt. Fliesst das Wasser aber daneben oder darunter durch, so wird keine Leckage erkannt, bis sie sich im Innenraum bemerkbar macht. Ihre Ortung bleibt schwierig, trotz der zuvor angebrachten Sensoren.

Aus der US 10,078,030 B2 ist ein etwa quadratisches Substrat bekannt, das auf beiden Seiten jeweils parallele Metallleiter umfasst, wobei die Leiter auf einer Seite quer zu den Leitern auf der anderen Seite angebracht sind. Durch Verbinden der Leiter einer Vielzahl solcher aneinander gelegter Substrate kann ein Flüssigkeits-Detektorsystem geschaffen werden. Die elektrischen Kontakte aller Leiterenden zwischen den Matten müssen kontaktsicher miteinander verbunden werden.

### Darstellung der Erfindung

Es ist die Aufgabe der vorliegenden Erfindung, eine Matte zu beschreiben, die als Leckageortungs-Sensor verwendet werden kann, sowie einen daraus hergestellten Leckageortungs-Sensor und ein Leckageortungs-Überwachungsgerät. Zudem Soll eine Gebäudefläche mit einem solchen Leckageortungs-Sensor beschrieben werden und ein Verfahren zur Herstellung eines solchen Leckageortungs-Sensors, sowie ein Verfahren zur Leckagen-Überwachung.

Die Aufgaben werden gelöst durch die Merkmale der ersten Ansprüche in den jeweiligen Kategorien. Weitere vorteilhafte Ausführungen sind in den Unteransprüchen beschrieben.

Erfindungsgemäss umfasst eine eingangs erwähnte Matte eine als Meterware hergestellte textile, hydrophile Stoffbahn, ausgestaltet als Gewebe, mit einer Oberseite und einer Rückseite aus einem im trockenen Zustand elektrisch nichtleitenden Material. Dabei sind im Bereich der Oberseite dieses Gewebes in Laufmeterrichtung in definierten Abständen a, vorzugsweise zwischen 0.3 und 1.5 m, parallel zueinander elektrisch nicht isolierte Leiterbahnen derart eingewebt, dass sie keinen elektrischen Kontakt zur Rückseite bilden.

Erfindungsgemäss ist die Stoffbahn in Laufmeterrichtung in den definierten Abständen a parallel zueinander doppelwandig ausgestaltet mit jeweils nur zur Oberseite hin gerichteten Wänden und nur zur Rückseite hin gerichteten Wänden, wobei alle Leiterbahnen jeweils nur in den zur Oberseite hin gerichteten Wänden eingewebt sind und die zur Rückseite hin gerichteten Wände im trockenen Zustand elektrisch isolierend sind.

Eine solche hydrophile Matte benetzt sich daher sehr schnell mit Wasser, wenn sie innerhalb einer Gebäudefläche verbaut ist, an der eine Leckage aufgetreten ist. Nach geraumer Zeit erreicht das Wasser auch eine der Leiterbahnen.

Ein erfindungsgemässer Leckageortungs-Sensor umfasst zwei aufeinander und quer zueinander verlegte Lagen, wobei jede Lage aus einer oder mehreren parallel nebeneinander angeordneten Matten besteht. Dadurch kreuzen sich die Leiterbahnen der beiden Lagen in regelmässig angeordneten Knotenpunkten, die in Längs- und in Querrichtung im Abstand a voneinander beabstandet sind. Dort sind sie durch einen Bereich der Rückseite mindestens einer der Matten beabstandet und somit elektrisch voneinander isoliert. Die Matten werden dafür direkt wie beschrieben in zwei Lagen auf einer Gebäudefläche verlegt und anschliessend mit ihren Leiterbahnen an einer Auswerteeinheit zu einem Leckageortungs-Überwachungsgerät verbunden. Auf einer Gebäudefläche wird mindestens ein solcher Leckageortungs-Sensor unter einer Wasserisolationsschicht angebracht.

Sobald Wasser in den Bereich des Leckageortungs-Sensors gelangt, breitet sich dieses dank der Kapillarwirkung der Fasern in den hydrophilen Matten schnell aus und erreicht schliesslich einen Knotenpunkt, wodurch die elektrische Isolation an dieser Stelle aufgehoben ist.

Ein Leckageortungs-Überwachungsgerät umfasst einen solchen Leckageortungs-Sensor sowie ein Auswertegerät, an dem alle Leiterbahnen beider Lagen elektrisch angeschlossen sind.

Bei einer Leckagen-Überwachung führt die Auswerteeinheit sukzessive Stromdurchgangsprüfungen zwischen beiden Leiterbahnen aller Knotenpunkte durch. Ein festgestellter Stromdurchfluss an einem Knotenpunkt bedeutet, dass Wasser zu dieser Stelle eingedrungen ist und die Isolation des Stoffs aufgehoben hat. Bei Feststellung eines Stromdurchgangs wird demnach eine Leckage festgestellt. Auf Grund der Kenntnis der Verläufe aller Leiterbahnen und dadurch auch von den Leiterbahnen, zwischen denen der Stromdurchgang festgestellt wurde, kann die Leckage geortet und eine Meldung darüber erstellt werden. Durch die vollflächige Verlegung der Matten an der Gebäudefläche, insbesondere auf einem Dach, und Dank der erforderlichen Saugfähigkeit der textilen Stoffbahnen ist gewährleistet, dass jede Unebenheit an der Gebäudefläche prozesssicher überwacht wird.

Auf diese Weise kann die Leckage sehr genau geortet werden. Für eine Behebung des Lecks kann die Wasserisolationsschicht gezielt an der fehlerhaften Stelle erneuert werden. Die Kosten hierfür sind überschaubar. Zudem hat der Eigentümer des Gebäudes Gewissheit, dass der Schaden effektiv behoben ist.

### Kurze Beschreibung der Zeichnungen

Im Folgenden wird die Erfindung mit Bezug auf die schematischen Darstellungen in den folgenden Figuren näher erklärt. Die Figuren stellen bevorzugte Ausführungen dar und haben dabei keine einschränkende Wirkung auf den Erfindungsgegenstand. Es zeigen:
- Fig. 1: eine perspektivische Darstellung einer erfindungsgemässen Matte;
- Fig. 2: ein Segment einer erfindungsgemässen Matte im Bereich von Leiterbahnen in perspektivischer Darstellung;
- Fig. 3: ein möglicher Messaufbau zur Untersuchung der Saugfähigkeit des für die Matte verwendeten Stoffs;
- Fig. 4: (a) eine perspektivische Darstellung zum Aufbau eines Leckageortungs-Sensors (b) Aufsicht auf einen Leckageortungs-Sensor, zu einem Leckageortungs-Überwachungsgerät erweitert;
- Fig. 5: (a) ein Aufriss eines Teils einer Gebäudefläche (b) in detaillierter Ansicht mit Leckagen.

### Wege zur Ausführung der Erfindung

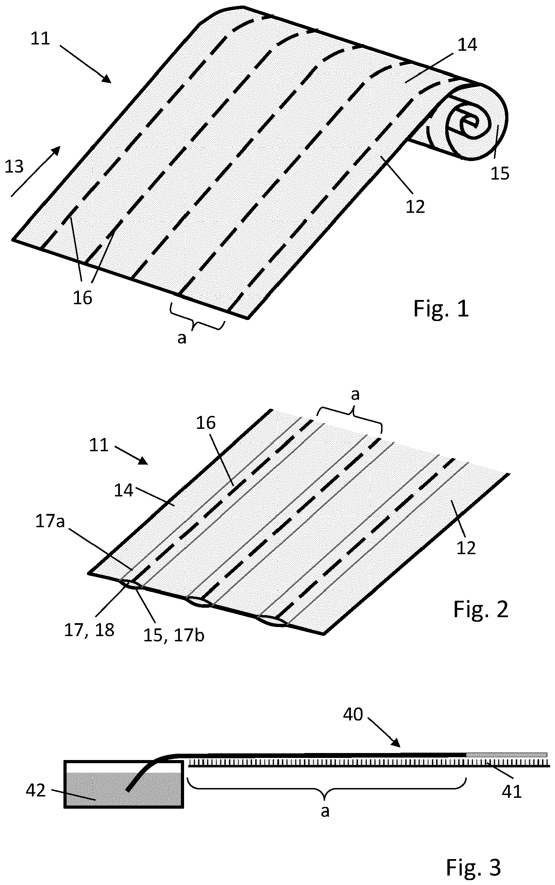

Die Fig. 1 zeigt eine erfindungsgemässe Matte 11 zur Erstellung eines Leckageortungs-Sensors 20. Sie umfasst eine textile, hydrophile Stoffbahn 12, die als Meterware hergestellt ist und eine Oberseite 14 sowie eine Rückseite 15 aufweist. Der Stoff 12 ist ein Gewebe und besteht aus einem im trockenen Zustand elektrisch nichtleitenden Material.

Im Bereich der Oberseite 14 sind elektrisch nicht isolierte Leiterbahnen 16 in Laufmeterrichtung 13 in definierten Abständen a parallel zueinander derart eingewebt, dass sie keinen elektrischen Kontakt an der Rückseite 15 bilden. Die Leiterbahnen 16 sind in das Gewebe eingewebt.

In Fig. 2 ist ein Ausschnitt der Stoffbahn 12 in einer erfindungsgemässen Ausführung dargestellt. Im Bereich der Leiterbahnen 16 ist das Gewebe 12 doppelwandig 17 ausgestaltet, wobei jeweils eine Wand 17a zur Oberseite 14 und eine Wand 17b zur Rückseite hin ausgerichtet ist, sodass diese einen Kanal 18 bilden, der sich entlang der gesamten Stoffbahn 12 erstreckt. Jede Leiterbahn 16 ist ausschliesslich in der Wand 17a zur Oberseite hin eingewebt, sodass die andere Wand 17b im trockenen Zustand stets zur Rückseite hin eine elektrische Isolation bildet. Die Leiterbahnen 16 werden direkt beim Webprozess in den das Gewebe 12 eingewebt. Die Kanäle 18 können allerdings derart schmal sein, dass sie sich nur über wenige Kettfäden erstreckt, sodass sie kaum als solche erkennbar sind.

Diese Leiterbahnen 16 können aus rostfreien Materialien bestehen, beispielsweise aus Edelstahl. Vorzugsweise sind sie auch salzwasserbeständig und/oder korrosionsfrei. Alternativ dazu können die Leiterbahnen 16 mit leitenden Materialien beschichtete Monofile sein, wobei die Beschichtungen beispielsweise Silber oder Kupfer umfassen können.

Alle hier beschriebenen Matten 11 sind geeignet, eine Leckage 36 auf einer Gebäudefläche 30, insbesondere auf einem Flachdach oder einem Schettdach, zu orten. Wichtig ist allerdings, dass die Stoffbahnen 12 hydrophil sind.

Die Kapillarwirkung der Fasern, aus denen die Matte 11 besteht, kann auch mit einer in Fig. 3 beschriebenen Testanlage bewertet werden. Es muss gewährleistet werden, dass die Bewertung für jeden beliebig ausgerichteten Teststreifen 40 aus der Stoffbahn 11 zutrifft. Dazu wird von der Matte 11 in Laufmeterrichtung 13 und quer dazu je ein Teststreifen 40 in einer Länge erstellt, die länger ist als der Abstand a zweier Leiterbahnen 16, und horizontal auf ein Gitter 41 gelegt. Es muss darauf geachtet werden, dass zwischen den Teststreifen 40 und der Unterlage keine durchgehende Kapillarwirkung entsteht. Mit einem Gitter 41 als Unterlage kann dies gut erreicht werden. Die einen Enden der langen Teststreifen 40 werden nun in ein Wasserbecken 42 gelegt, das ausreichend mit Wasser gefüllt ist, um beide Teststreifen vollständig zu tränken.

Je nachdem, wie hydrophil die Matte 11 ist, dauert es länger oder weniger lang, bis sich die Teststreifen 40 mit Wasser vollgesaugt und einen stabilen Zustand erreicht haben. Da die Sauggeschwindigkeit nicht von Bedeutung ist, wird der Zustand nach einer Stunde begutachtet und die Strecke beginnend vom Wasserbecken 42 ermittelt, in der jeder Teststreifen 40 mit Wasser durchtränkt ist. Wenn diese Strecke jeweils mindestens so lang ist wie der Abstand a zwischen zwei Leiterbahnen 16, so ist die Kapillarwirkung der Matte 11 ausreichend für den hier angegebenen Zweck.

Sobald die Matte 11 nass ist, verliert sie ihre elektrische Isolationswirkung und wird elektrisch leitend.

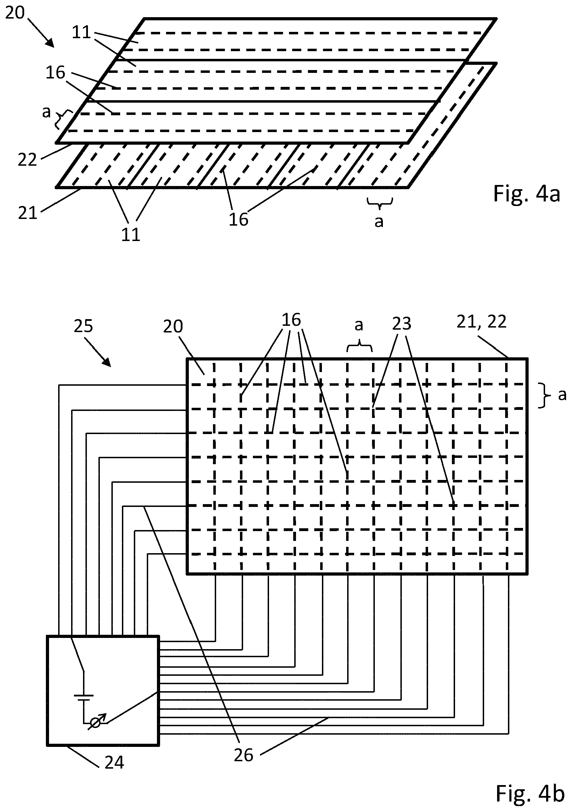

Fig. 4a zeigt schematisch den Aufbau eines Leckageortungs-Sensors 20. Er umfasst zwei aufeinander und quer zueinander verlegte Lagen 21, 22, wobei jede Lage 21, 22 aus einer oder mehreren parallel nebeneinander angeordneten Matten 11 besteht. Dadurch kreuzen sich die Leiterbahnen 16 der beiden Lagen 21, 22 in regelmässig angeordneten Knotenpunkten 23 mit den Abständen a und sind dort jeweils mindestens durch einen Bereich der Rückseite 15 einer Matte 11 beabstandet.

In Fig. 4b sind solche Lagen 21, 22 in einer Aufsicht dargestellt, wobei die Leiterbahnen 16 der unteren Lage 21 auch eingezeichnet sind, um die Knotenpunkte 23 darzustellen.

Die Matten 11 können in den Lagen 21, 22 derart verlegt werden, dass ihre Oberseiten 14 jeweils voneinander abgewandt sind. Alternativ dazu können sie so verlegt werden, dass ihre Oberflächen 14 alle in dieselbe Richtung zeigen. Um zu verhindern, dass die Leiterbahnen im trockenen Zustand der Matten 11 an den Knotenpunkten 23 einen elektrischen kontakt bilden können, dürfen die Oberflächen 14 der Matten 11 der beiden Lagen 21, 22 nicht gegeneinander gerichtet verlegt sein.

In Fig. 4b ist ein Leckage-Überwachungsgerät 25 dargestellt. Dazu ist am Leckageortungs-Sensor 20 eine Auswerteeinheit 24 elektrisch verbunden. Jede Leiterbahn 16 beider Lagen 21, 22 ist elektrisch an einem Leiter 26 kontaktiert, der an der Auswerteeinheit 24 elektrisch angeschlossen ist. Die Leiter 26 sind isoliert. Die Auswerteeinheit 24 kann im Einsatz sukzessive Stromdurchgangsprüfungen an allen Knotenpunkten 23 durchführen, indem zwischen den entsprechenden Leitern 26 resp. Leiterbahnen 16, die den jeweiligen Knotenpunkt 23 bilden, eine Spannung angelegt wird. Im trockenen Zustand verhindert mindestens ein Teil der Rückseite 15 der Matte 11 einen Stromdurchgang am Knotenpunkt 23. Sobald aber durch eine Leckage 36 die Matte 11 im Bereich dieses Knotenpunktes 23 nass ist, wird die Isolation dort aufgehoben und die Auswerteeinheit 24 wird einen Stromfluss beim Anlegen einer Spannung feststellen. Auf Grund der Kenntnis der Verläufe aller Leiterbahnen 16 kann der Ort des Leckageortungs-Sensors 20 bestimmt werden, wo sich der Knotenpunkt 23 befindet, an dem der Stromdurchgang festgestellt wurde. So ist es möglich, die Leckage 36 genau zu orten. Die undichte Stelle kann somit früh erkannt und ausgebessert werden, bevor grössere Schäden durch die Leckage 36 entstanden sind.

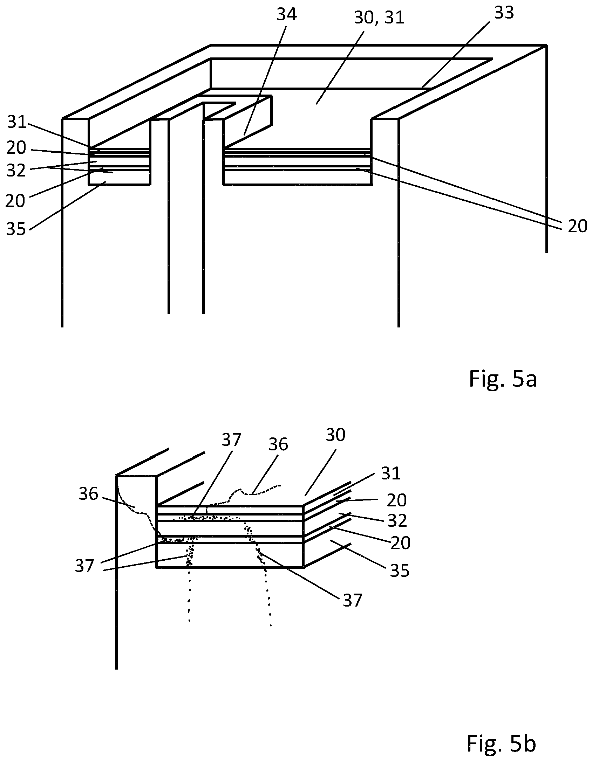

Fig. 5a zeigt einen Ausschnitt einer Gebäudefläche 30, hier von einem Flachdach, mit einem Leckageortungs-Sensor 20, der unter einer Wasserisolationsschicht 31 verbaut ist. Als Gebäudefläche 30 kann auch ein Boden- oder Wandsegment mit einem Leckageortungs-Sensor 20 bestückt werden. Die Gebäudefläche 30 ist von einem äusseren Randgebiet 33 begrenzt und kann auch innere Randgebiete 34 aufweisen wie beispielsweise Fenster oder Dachfenster, Dachaufbauten, Kamine, Schächte, Entlüftungen oder Zu- resp. Ableitungen. Die Wasserisolationsschicht 31 muss insbesondere auch zu den äusseren und inneren Randgebieten 33, 34 gut abgedichtet sein. Zudem kann unterhalb des Leckageortungs-Sensors 20, gegen das Gebäudeinnere gereichtet, eine Zwischenschicht 32 angeordnet sein, unter der optional ein weiterer Leckageortungs-Sensors 20 auf einer inneren Gebäudestruktur 35 verbaut ist. Die Zwischenschicht 32 kann beispielsweise eine Wärmeisolation umfassen.

Fig. 5b zeigt einen Ausschnitt einer solchen Gebäudefläche 30 bei einem inneren oder äusseren Randgebiet 33, 34, sowie Leckagen 36, also undichte Stellen oder Risse, an denen Wasser unter die Wasserisolationsschicht 31 oder durch das Randgebiet 33, 34 eindringen kann. Durch solche Leckagen 36 werden in dem oder in den Leckageortungs-Sensoren 20 lokale feuchte Stellen 37 gebildet.

Mit Hilfe jedes verbauten Leckageortungs-Sensors 20, der mit einer Auswerteeinheit 24 zu einem Leckageortungs-Überwachungsgerät 25 fertiggestellt ist, kann eine allfällige Leckage 36 zuverlässig erkannt und geortet werden. Beim Eintritt von Wasser durch die Wasserisolationsschicht 31 oder durch ein Randgebiet 33, 34 einer Gebäudeoberfläche 30 wird die in der Nähe angeordnete Matte 11 des Leckageortungs-Sensors 20 stetig benässt. Schliesslich bildet sich eine sich stets vergrössemde feuchte Stelle 37 im Leckageortungs-Sensor 20, die schliesslich einen Knotenpunkt 23 erreicht und einen Stromdurchgang zwischen den sich dort kreuzenden Leiterbahnen 16 zulässt. Das Auswertegerät 24 stellt bei seinen sukzessiven Stromdurchgangsprüfungen diesen Stromdurchgang fest und kann auf Grund der Kenntnis der Verläufe aller Leiterbahnen 16 schliesslich die genaue Stelle des einen Knotenpunks 23 bestimmen, an dem sich die beiden Leiterbahnen 16 aus den zwei Lagen 21, 22 kreuzen, die den Stromdurchgang ermöglichten. Sollte die Leckage 36 durch ein inneres oder äusseres Randgebiet 33, 34 verlaufen, so kann ein zweiter, unterer Leckageortungs-Sensor 20 diese Leckage 36 erfassen und orten, auch wenn die Wasserisolationsschicht 31 intakt ist.

Die Erfindung umfasst auch ein Verfahren zum Herstellen eines Leckageortungs-Sensors 20 nach Anspruch 10.

Dazu wird auf einer Gebäudefläche 30 eine erste Lage 21 von einer oder mehreren erfindungsgemässen Matten 11 mit Leiterbahnen 16 parallel und nebeneinander angeordnet verlegt. Anschliessend wird auf diese erste Lage 21 eine zweite solche Lage 22 gleichermassen aber quer zur ersten Lage 21 verlegt, sodass regelmässige Knotenpunkte 23 entstehen, an denen die Leiterbahnen 16 jeweils durch mindestens einen Bereich der Rückseite 15 einer Matte 11 beabstandet und somit elektrisch voneinander isoliert sind.

Um ein Leckageortungs-Überwachungsgerät 25 herzustellen, wird anschliessend jede Leiterbahn 16 jeder Matte 11 mit einer Auswerteeinheit 24 elektrisch verbunden.

Zudem umfasst die Erfindung ein Verfahren zur Leckagen-Überwachung einer Gebäudefläche 30 nach Anspruch 12.

Dabei führt die Auswerteeinheit 24 sukzessive Stromdurchgangsprüfungen an beiden Leiterbahnen 16 aller Knotenpunkte 23 durch. Bei Feststellung eines Stromdurchgangs wird auf das Vorhandensein einer Leckage 16 geschlossen und auf Grund der Kenntnis der jeweiligen Verläufe der betroffenen Leiterbahnen 16 wird die Leckage 36 geortet und eine Meldung darüber erstellt.

In einem erweiterten Verfahren werden vorgängig alle Leiterbahnen 16 der ersten Lage 21 zusammen zu einem ersten Kontakt und alle Leiterbahnen 16 der zweiten Lage 22 zu einem zweiten Kontakt elektrisch verbunden. Zur Prüfung einer Leckage 36 werden permanent oder in regelmässigen Abständen Stromdurchgangsprüfungen zwischen diesen beiden Kontakten durchgeführt. Solange kein Stromdurchgang ermittelt wird, befindet sich keine feuchte Stelle 37 an einem Knotenpunkt 23, es wird somit keine Leckage 36 ermittelt. Sobald aber ein Stromdurchgang festgestellt wird, kann anschliessend mit den sukzessiven Stromdurchgangsmessungen zwischen allen einzelnen Leiterbahnen 16 beider Lagen 21, 22 derjenige Knotenpunkt 23 ermittelt werden, der für den Stromdurchgang verantwortlich ist. So wird der Knotenpunkt 23 geortet, der nahe bei der Leckage 36 ist. Wichtig ist, dass eindringendes Wasser nicht unter der ersten Lage 21 durchfliessen kann, ohne die Matte 11 ausreichend zu benetzen. Daher muss die Saugfähigkeit der Matte 11 derart ausreichend sein, dass Wasser auch über eine längere Strecke, die mindestens dem Abstand a zweier Leiterbahnen entspricht, horizontal aufgesaugt wird, wenn eine lokale Leckage 36 auftritt.

### Bezugszeichenliste

- 11: Matte
- 12: Stoffbahn, textile Stoffbahn, Stoff, Gewebe
- 13: Laufmeterrichtung
- 14: Oberseite
- 15: Rückseite, Bereich der Rückseite
- 16: Leiterbahn
- 17: Doppelwand; 17a: Wand zur Oberseite; 17b: Wand zur Rückseite
- 18: Kanal
- 20: Leckageortungs-Sensor
- 21: Lage, erste Lage
- 22: Lage, zweite Lage
- 23: Knotenpunkt
- 24: Auswerteeinheit
- 25: Leckageortungs-Überwachungsgerät
- 26: Leitungen
- 30: Gebäudefläche, Dach, Flachdach oder Schettdach
- 31: Wasserisolationsschicht
- 32: Zwischenschicht, Wärmeisolation
- 33: Äusseres Randgebiet
- 34: Inneres Randgebiet
- 35: Innere Gebäudestruktur
- 36: Leckage
- 37: Feuchte Stelle, Wasser
- 40: Teststreifen
- 41: Gitter
- 42: Wasserbecken

- a: Abstand

## Patentansprüche

1. Matte (11) zur Erstellung eines Leckageortungs-Sensors (20), der geeignet ist, eine Leckage (36) auf einer Gebäudefläche (30), insbesondere auf einem Flachdach oder einem Schettdach, zu orten,
umfassend eine als Meterware hergestellte textile, hydrophile Stoffbahn (12) mit einer Oberseite (14) und einer Rückseite (15) aus einem im trockenen Zustand elektrisch nichtleitenden Material,
wobei die textile Stoffbahn (12) ein Gewebe ist, in welches im Bereich ihrer Oberseite (14) in Laufmeterrichtung (13) in definierten Abständen (a) parallel zueinander elektrisch nicht isolierte Leiterbahnen (16) derart eingewebt sind, dass sie keinen elektrischen Kontakt an der Rückseite (15) bilden, **dadurch gekennzeichnet, dass** die Stoffbahn (12) in Laufmeterrichtung (13) in den definierten Abständen (a) parallel zueinander doppelwandig (17) ausgestaltet ist mit jeweils nur zur Oberseite (14) hin gerichteten Wänden (17a) und nur zur Rückseite (15) hin gerichteten Wänden (17b), wobei alle Leiterbahnen (16) jeweils nur in den zur Oberseite (14) hin gerichteten Wänden (17a) eingewebt sind und die zur Rückseite (15) hin gerichteten Wände (17b) im trockenen Zustand elektrisch isolierend sind.

2. Matte (11) nach Anspruch 1, **dadurch gekennzeichnet, dass** die textile Stoffbahn (11) mehrheitlich aus Fasern mit einer derart hohen Kapillarwirkung besteht, dass jeder beliebig ausgerichtete Teststreifen (40) aus der Stoffbahn (11), der in waagerechter Lage auf einem Gitter (41) liegt und einseitig in ein Wasserbecken (42) ragt, nach einer Stunde mindestens bis zu einem Abstand (a) vom Wasserbecken (42) mit Wasser durchtränkt und dadurch elektrisch leitend ist, der dem Abstand (a) zwischen zwei Leiterbahnen (16) entspricht.

3. Matte (11) nach einem der vorhergehenden Ansprüche, **dadurch gekennzeichnet, dass** die Leiterbahnen (16) aus rostfreien, vorzugsweise salzwasserbeständigen Materialien bestehen.

4. Matte (11) nach einem der Ansprüche 1 bis 2, **dadurch gekennzeichnet, dass** die Leiterbahnen (16) mit leitenden Materialien beschichtete Monofile sind.

5. Leckageortungs-Sensor (20) umfassend zwei aufeinander und quer zueinander verlegte Lagen (21, 22), wobei jede Lage (21, 22) aus einer oder mehreren parallel nebeneinander angeordneten Matten (11) gemäss einem der vorhergehenden Ansprüche besteht, sodass sich die Leiterbahnen (16) der beiden Lagen (21, 22) in regelmässig angeordneten Knotenpunkten (23) kreuzen und dort jeweils mindestens durch einen Bereich der Rückseite (15) einer Matte (11) beabstandet sind.

6. Leckageortungs-Überwachungsgerät (25) umfassend einen Leckageortungs-Sensor (20) nach Anspruch 5 sowie eine Auswerteeinheit (24), an welcher alle Leiterbahnen (16) beider Lagen (21, 22) elektrisch angeschlossen sind, um durch sukzessive Stromdurchgangsprüfungen zwischen beiden Leiterbahnen (16) aller Knotenpunkte (23) eine Leckage (36) durch Stromfluss an einem nassen Knotenpunkt (23) feststellen zu können, und die Ortung der Leckage (36) auf Grund der Kenntnis der jeweiligen Verläufe der betroffenen Leiterbahnen (16) möglich ist.

7. Gebäudefläche (30), beispielsweise ein Dach in Form eines Flach- oder Schettdachs, umfassend einen Leckageortungs-Sensor (20) nach Anspruch 5 oder ein Leckageortungs-Überwachungsgerät (25) nach Anspruch 6, **dadurch gekennzeichnet, dass** der Leckageortungs-Sensor (20) unter einer Wasserisolationsschicht (31) angeordnet ist.

8. Gebäudefläche (30) nach Anspruch 7, **dadurch gekennzeichnet, dass** unter der Wasserisolationsschicht (31) mindestens zwei Leckageortung-Sensoren (20) angeordnet sind, beabstandet durch eine Zwischenschicht (32) wie beispielsweise eine Wärmeisolation, um eine Leckage (36) auch an einem äusseren oder inneren Randgebiet (33, 34) wie einem Fenster, einem Schacht, einer Entlüftungen oder eines Ein- oder Auslasses der Gebäudefläche (30) orten zu können.

9. Gebäudefläche (30) nach Anspruch 7 oder 8, **dadurch gekennzeichnet, dass** jeder Leckageortungs-Sensor (20) an einer Auswerteeinheit (24) zu einem Leckageortungs-Überwachungsgerät (25) nach Anspruch 6 verbunden ist.

10. Verfahren zum Herstellen eines Leckageortungs-Sensors (20) nach Anspruch 5, **dadurch gekennzeichnet, dass** auf einer Gebäudefläche (30) eine erste Lage (21) von einer oder mehreren parallel nebeneinander angeordneten Matten (11) gemäss einem der Ansprüche 1 bis 4 verlegt werden, und dass auf diese erste Lage (21) eine zweite solche Lage (22) gleichermassen aber quer zur ersten Lage (21) verlegt wird, sodass regelmässige Knotenpunkte (23) entstehen, an denen die Leiterbahnen (16) jeweils mindestens durch einen Bereich der Rückseite (15) einer Matte (11) beabstandet sind.

11. Verfahren nach Anspruch 10, **dadurch gekennzeichnet, dass** anschliessend jede Leiterbahn (16) mit einer Auswerteeinheit (24) elektrisch verbunden wird.

12. Verfahren zur Leckagen-Überwachung einer Gebäudefläche (30) nach Anspruch 9, **dadurch gekennzeichnet, dass** die Auswerteeinheit (24) sukzessive Stromdurchgangsprüfungen zwischen beiden Leiterbahnen (16) aller Knotenpunkte (23) durchführt, und dass bei Feststellung eines Stromdurchgangs eine Leckage (36) festgestellt und auf Grund der Kenntnis der jeweiligen Verläufe der betroffenen Leiterbahnen (16) die Leckage (36) geortet und eine Meldung darüber erstellt wird.

13. Verfahren nach Anspruch 12, **dadurch gekennzeichnet, dass** vorgängig alle Leiterbahnen (16) der ersten Lage (21) zu einem ersten Kontakt und alle Leiterbahnen (16) der zweiten Lage (22) zu einem zweiten Kontakt elektrisch miteinander verbunden werden und zur Prüfung einer Leckage (36) permanent oder in regelmässigen Abständen Stromdurchgangsprüfungen zwischen beiden Kontakten durchgeführt werden, und bei positivem Stromdurchgang, d.h. nach Feststellung einer Leckage (36), die Ortung der Leckage (36) durch sukzessive Stromdurchgangsprüfungen durchgeführt wird.

## Claims

1. Mat (11) for creating a leakage locating sensor (20) suitable for locating a leakage (36) on a building surface (30), in particular on a flat roof or a saw-tooth roof,
comprising a textile, hydrophilic panel of fabric (12) produced as yard goods with an upper side (14) and a rear side (15) made of a material which is electrically nonconductive in the dry state,
wherein the textile panel of fabric (12) is a fabric into which electrically non-insulated conductor tracks (16) are woven in the region of its upper side (14) in yard-goods direction (13) at defined distances (a) parallel to one another in such a way that they do not form any electrical contact on the rear side (15), **characterised in that** the panel of fabric (12) is double-walled (17) in the yard-goods direction (13) at the defined distances (a) parallel to one another, with walls (17a) respectively directed only towards the upper side (14) and walls (17b) respectively directed only towards the rear side (15), wherein all conductor tracks (16) are respectively woven only in the walls (17a) directed towards the upper side (14) and the walls (17b) directed towards the rear side (15) are electrically insulating in the dry state.

2. Mat (11) according to claim 1, **characterised in that** the textile panel of fabric (11) consists mainly of fibres with such a high capillary action that any arbitrarily oriented test strip (40) of the panel of fabric (11), which lies in a horizontal position on a grid (41) and projects on one side into a water basin (42), is impregnated with water after one hour at least up to a distance (a) from the water basin (42) and is thereby electrically conductive, which corresponds to the distance (a) between two conductor tracks (16).

3. Mat (11) according to one of the preceding claims, **characterised in that** the conductive tracks (16) consist of rustproof, preferably salt water-resistant materials.

4. Mat (11) according to one of claims 1 to 2, **characterised in that** the conductive tracks (16) are monofilaments coated with conductive materials.

5. Leakage locating sensor (20) comprising two layers (21, 22) laid one on top of the other and transversely to one another, wherein each layer (21, 22) consists of one or more mats (11) according to one of the preceding claims arranged parallel next to one another, so that the conductor tracks (16) of the two layers (21, 22) cross one another at regularly arranged nodes (23) and are spaced apart there respectively at least by a region of the rear side (15) of a mat (11).

6. Leakage locating monitoring device (25) comprising a leakage locating sensor (20) according to claim 5 and an evaluation unit (24) to which all conductor tracks (16) of both layers (21, 22) are electrically connected in order to be able to detect, by successive current continuity tests between both conductor tracks (16) of all nodes (23), a leakage (36) by current flow at a wet node (23), and the locating of the leakage (36) is possible on the basis of the knowledge of the respective courses of the conductor tracks (16) concerned.

7. Building surface (30), for example a roof in the form of a flat or saw-tooth roof, comprising a leakage locating sensor (20) according to claim 5 or a leakage locating monitoring device (25) according to claim 6, **characterized in that** the leakage locating sensor (20) is arranged under a water insulation layer (31).

8. Building surface (30) according to claim 7, **characterised in that** at least two leakage locating sensors (20) are arranged under the water insulation layer (31), spaced apart by an intermediate layer (32) such as, for example, a thermal insulation, in order to be able to locate a leakage (36) also at an outer or inner edge region (33, 34) such as a window, a shaft, a ventilation or an inlet or outlet of the building surface (30).

9. Building surface (30) according to claim 7 or 8, **characterised in that** each leakage locating sensor (20) is connected at an evaluation unit (24) to a leakage locating monitoring device (25) according to claim 6.

10. Method of manufacturing a leakage locating sensor (20) according to claim 5, **characterised in that** a first layer (21) of one or more mats (11) according to one of claims 1 to 4 are arranged parallel to one another on a building surface (30), and **in that** a second such layer (22) is laid on this first layer (21) likewise but transversely to the first layer (21), so that regular nodes (23) are formed at which the conductor tracks (16) are respectively spaced apart at least by a region of the rear side (15) of a mat (11).

11. Method according to claim 10, **characterised in that** subsequently each conductor track (16) is electrically connected to an evaluation unit (24).

12. Method for leakage monitoring of a building surface (30) according to claim 9, **characterised in that** the evaluation unit (24) successively carries out current continuity tests between both conductor tracks (16) of all nodes (23), and **in that**, if a current continuity is detected, a leakage (36) is detected and, on the basis of the knowledge of the respective courses of the conductor tracks (16) concerned, the leakage (36) is located and a message is produced about it.

13. Method according to claim 12, **characterised in that** all conductor tracks (16) of the first layer (21) are electrically connected to a first contact and all conductor tracks (16) of the second layer (22) are electrically connected to a second contact and current continuity tests are carried out permanently or at regular intervals between both contacts in order to test for a leakage (36), and in the event of positive current continuity, i.e. after a leakage (36) has been detected, the location of the leakage (36) is carried out by successive current continuity tests.

## Revendications

1. Natte (11), destinée à créer un capteur (20) de localisation des fuites, qui est adapté pour localiser une fuite (36) sur une surface (30) de bâtiment, notamment sur un toit plat ou sur un toit en dent de scie,
comprenant une bande (12) de tissu textile hydrophile, fabriquée au mètre, pourvue d'une face supérieure (14) et d'une face arrière (15) en une matière non conductrice d'électricité lorsqu'elle est sèche,
la bande (12) de tissu textile étant un tissu dans lequel, dans la zone de sa face supérieure (14), dans la direction (13) métrique linéaire, des pistes conductrices (16) non isolées électriquement sont tissées à des écarts (a) définis, de sorte à ne créer aucun contact électrique sur la face arrière (15), **caractérisée en ce que** dans la direction (13) métrique linéaire, la bande (12) de tissu est conçue selon les écarts (a) définis à double paroi (17), placées à la parallèle mutuelle avec des parois (17a) respectivement dirigées uniquement vers la face supérieure (14) et des parois (17b) uniquement dirigées vers la face arrière (15), toutes les pistes conductrices (16) n'étant tissées respectivement que dans les parois (17a) dirigées vers la face supérieure (14) et lorsqu'elles sont sèches, les parois (17b) dirigées vers la face arrière (15), étant électriquement isolantes.

2. Natte (11) selon la revendication 1, **caractérisée en ce que** la bande (11) de tissu textile est constituée généralement de fibres à effet capillaire aussi important que chaque bandelette (40) de test dirigée de manière quelconque de la bande (11) de tissu, qui se situe en position horizontale sur une grille (41) et saillit par un côté dans un bassin d'eau (42) soit imbibée d'eau après une heure au moins jusqu'à un écart (a) par rapport au bassin d'eau (42) qui correspond à l'écart (a) entre deux pistes conductrices (16) et de ce fait soit conductrice d'électricité.

3. Natte (11) selon l'une quelconque des revendications précédentes, **caractérisée en ce que** les pistes conductrices (16) sont constituées dans des matières inoxydables, de préférence résistant à l'eau salée.

4. Natte (11) selon l'une quelconque des revendications 1 à 2, **caractérisée en ce que** les pistes conductrices (16) sont des mono-filaments revêtus de matières conductrices.

5. Capteur (20) de localisation des fuites comprenant deux couches (21, 22) posées l'une sur l'autre et à la transversale l'une par rapport à l'autre, chaque couche (21, 22) étant constituée d'une ou de plusieurs nattes (11) placées à la parallèle les unes à côté des autres selon l'une quelconque des revendications précédentes, de telle sorte que les pistes conductrices (16) des deux couches (21, 22) se croisent en des points nodaux (23) placés régulièrement et y soient écartées chaque fois par au moins une zone de la face arrière (15) d'une natte (11).

6. Instrument de supervision (25) de localisation des fuites comprenant un capteur (20) de localisation des fuites selon la revendication 5, ainsi qu'une unité d'évaluation (24), sur laquelle sont connectées électriquement toutes les pistes conductrices (16) des deux couches (21, 22), pour pouvoir constater une fuite (36) par circulation de courant sur un point nodal (23) mouillé, par des mesures de continuité du courant successives entre les deux pistes conductrices (16) de tous les points nodaux (23) et que la localisation de la fuite (36) soit possible sur la base de la connaissance des trajets respectifs des pistes conductrices (16) concernées.

7. Surface (30) de bâtiment, par exemple un toit sous la forme d'une toit plat ou d'un toit en dent de scie, comprenant un capteur (20) de localisation des fuites selon la revendication 5 ou un instrument de supervision (25) de localisation des fuites selon la revendication 6, **caractérisée en ce que** le capteur (20) de localisation des fuites est placé sous une couche d'étanchéité (31) à l'eau.

8. Surface (30) de bâtiment selon la revendication 7, **caractérisée en ce que** sous la couche d'étanchéité (31) à l'eau sont placés au moins deux capteurs (20) de localisation des fuites, écartés par une couche intermédiaire (32), comme par exemple une isolation thermique, pour pouvoir localiser une fuite (36) également sur une zone de bordure (33, 34) extérieure ou intérieure, telle qu'une fenêtre, un puits, une ventilation ou une entrée ou sortie de la surface (30) de bâtiment.

9. Surface (30) de bâtiment selon la revendication 7 ou 8, **caractérisée en ce que** chaque capteur (20) de localisation des fuites est connecté sur une unité d'évaluation (24) vers un instrument de supervision (25) de localisation des fuites selon la revendication 6.

10. Procédé, destiné à fabriquer un capteur (20) de localisation des fuites selon la revendication 5, **caractérisé en ce que** sur une surface (30) de bâtiment, l'on pose une première couche (21) d'une ou de plusieurs nattes (11) placées mutuellement à la parallèle les unes à côté des autres selon l'une quelconque des revendications 1 à 4 et **en ce que** sur la première couche (21), l'on pose une deuxième couche (22) couche de ce type, de la même manière mais à la transversale de la première couche (21), de sorte à donner naissance à des points nodaux (23) réguliers, sur lesquels les pistes conductrices (16) sont écartées chaque fois par au moins une zone de la face arrière (15) d'une natte (11).

11. Procédé selon la revendication 10, **caractérisée en ce que** par la suite, l'on connecte électriquement chaque piste conductrice (16) avec une unité d'évaluation (24).

12. Procédé destiné à superviser des fuites sur une surface (30) de bâtiment selon la revendication 9, **caractérisée en ce que** l'unité d'évaluation (24) procède à des essais de continuité électrique successifs entre les deux pistes conductrices (16) de tous les points nodaux (23) et **en ce que** lorsqu'une continuité de courant est constatée, une fuite (36) est constatée et sur la base de la connaissance des trajets respectifs des pistes conductrices (16) concernées, la fuite (36) est localisée et un message est établi à ce sujet.

13. Procédé selon la revendication 12, **caractérisée en ce que** préalablement, l'on connecte électriquement toutes les pistes conductrices (16) de la première couche (21) en un premier contact et toutes les pistes conductrices (16) de la deuxième couche (22) en un deuxième contact, et pour vérifier une fuite (36), l'on procède en permanence ou à intervalles réguliers à des essais de continuité de courant entre les deux contact et lorsque la continuité de courant est positive, c'est-à-dire après constatation d'une fuite (36), l'on procède à la localisation de la fuite (36) par des essais de continuité de courant successifs.
